# EUROPEAN PATENT APPLICATION

(11) **EP 3 506 530 A1**
(43) Date of publication of application: **03.07.2019**
(21) Application number: 17842862.9
(22) Date of filing: 18.08.2017
(51) Int. Cl.: H04B 10/038

(54) **CIRCUIT RECONFIGURATION METHOD AND APPARATUS**

(30) Priority: 23.08.2016 CN 201610708066
(71) Applicant: ZTE Corporation, Shenzhen, Guangdong 518057 (CN)
(72) Inventor: TANG, Rongdao, Shenzhen Guangdong 518057 (CN); LU, Liuming, Shenzhen Guangdong 518057 (CN); ZHANG, Minhua, Shenzhen Guangdong 518057 (CN)
(74) Representative: Taor, Simon Edward William
(86) International application number: PCT/CN2017/098163
(87) International publication number: WO 2018/036439

(57) **Abstract**

A circuit reconfiguration method, comprising: confirming a status of a circuit, sending a first signal when it is confirmed that the status of the circuit is abnormal, the first signal being used to instruct performing circuit reconfiguration.

## Description

### TECHNICAL FIELD

The present application relates to, but is not limited to, the field of communication technology, and in particular, to a line reconfiguration method and a line reconfiguration apparatus.

### BACKGROUND

In the communication technology, a deployment scenario of deploying optical fibers and optical network units (ONUs) to a place close to terminal users and accessing with copper cables from a distance of several hundred meters from the terminal users, may be referred to as Fiber-To-The-Distribution point (FTTDp), where Dp represents the distribution point, which is a handover point of a traditional network wiring end and an incoming line, and is the last handover point in the network from the terminal user.

In the process of upgrading old and new devices, usually not all customer premise equipments can switch to DPU devices at the same time. To improve efficiency, the user lines from a local Telecom room or outdoor cabinet equipment are usually wired to a CO port of a new Distribution Point Unit (DPU) device. For ports of customer premise equipments that have not been switched to the new device, in order to ensure the lines of these equipments may be properly connected to the original local Telecom room or outdoor cabinet equipment, the DPU has to implement a "bypass" function on the DPU device. Then, when an equipment needs to be upgraded to a new device port, only an upgrade command is to be sent from remote to disconnect terminal line from the CO interface of the DPU device, and to switch the terminal line from the port of the customer premise equipment to the port of the new device. Such function may be referred to as Remote Copper Reconfiguration (RCR). RCR can avoid the drawbacks of requiring maintenance personnel to go to the site every time a port upgrade is performed.

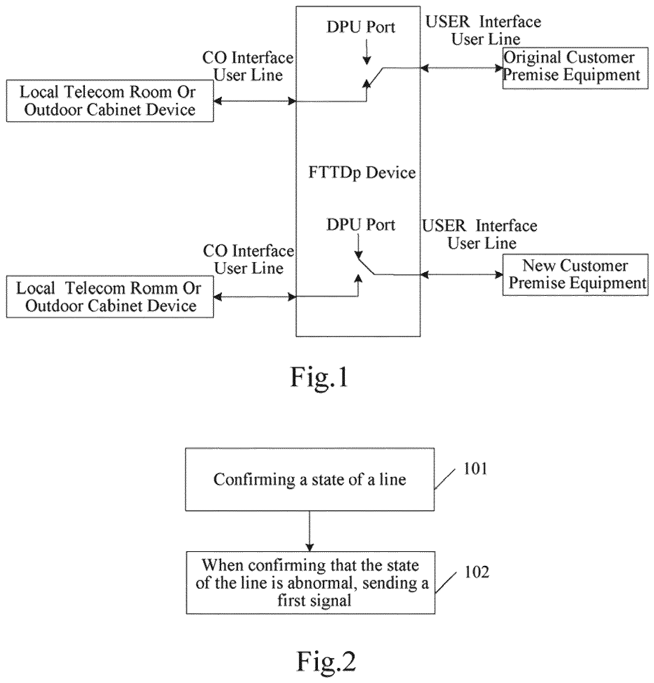

Fig. 1 is a schematic diagram of implementation of an RCR function. As shown in Fig. 1, the terminal line from the local Telecom room or outdoor cabinet has not been replaced since the equipment has not been replaced. The DPU device implements the "bypass" function and connects the terminal line of the CO interface to a USER interface to ensure the connection between the user line of the local Telecom room or outdoor cabinet equipment and the original customer premise equipment. When the new customer premise equipment has been put into use, the user line from the local Telecom room or the outdoor cabinet equipment has to be disconnected, and the user line on the USER interface is directly connected to the DPU device port.

The DPU device has a reverse power feed (RPF) requirement. The reverse power feed in the DPU device employs standard of Power over Ethernet (POE) to provide power to the DPU device through the customer premise equipment. Since the DPU device is powered by the customer premise equipment in the case of reverse power feed, during the switching process of the old and new devices, the DPU device may not be able to receive commands and cannot implement the RCR function due to lack of power supply.

### SUMMARY

The following is an overview of the subjects detailed in this document. This summary is not intended to limit the scope of the claims.

Embodiments of the present application provide a line reconfiguration method and a line reconfiguration apparatus, which can implement the RCR function during switching process of the DPU device.

In a first aspect, an embodiment of the present application provides a line reconfiguration method, including:
confirming a state of a line; and
when confirming that the state of the line is abnormal, sending a first signal, and the first signal is configured to instruct to perform line reconfiguration.

In an exemplary embodiment, a frequency range of the first signal does not overlap with a frequency range of a voice signal, and does not overlap with a frequency range of a wideband signal.

In an exemplary embodiment, sending the first signal may include: sending a sine wave signal or a square wave differential signal, and then outputting the same in an alternating current (AC) coupling manner.

In a second aspect, an embodiment of the present application provides a line reconfiguration method, including: receiving a first signal, the first signal being configured to instruct to perform line reconfiguration; and performing line reconfiguration based on the first signal.

In an exemplary embodiment, the performing line reconfiguration according to the first signal may include: converting the first signal into a pulse signal for controlling a relay coil, and performing the line reconfiguration of the electronic device by switching on or off states of the relay.

In an exemplary embodiment, the relay may be a single coil magnetic latching relay.

In a third aspect, an embodiment of the present application provides a line reconfiguration apparatus including: a confirmation module and a transmission module;
the confirmation module is configured to confirm a state of a line;
the transmission module is configured to send a first signal when the confirmation module confirms that the state of the line is abnormal, the first signal being configured to instruct to perform line reconfiguration.

In an exemplary embodiment, a frequency range of the first signal does not overlap with a frequency range of a voice signal, and does not overlap with a frequency range of a wideband signal.

In an exemplary embodiment, the transmission module may be configured to send a sine wave signal or a square wave differential signal and output the same in an AC coupling manner.

In a fourth aspect, an embodiment of the present application provides another line reconfiguration apparatus including: a receiving module and a reconfiguration module; the receiving module is configured to receive a first signal, the first signal being configured to instruct to perform line reconfiguration; and the reconfiguration module is configured to perform line reconfiguration according to the first signal.

In an exemplary embodiment, the reconfiguration module may be configured to convert the first signal into a pulse signal for controlling a relay coil, and perform the line reconfiguration of the electronic device by switching on or off states of the relay.

In an exemplary embodiment, the relay may be a single coil magnetic latching relay.

In addition, an embodiment of the present application also provides a computer readable medium storing a line reconfiguration program, the line reconfiguration program being executed by a processor to implement the steps of the line reconfiguration method of the above first aspect.

In addition, an embodiment of the present application also provides a computer readable medium storing a line reconfiguration program, the line reconfiguration program being executed by a processor to implement the steps of the line reconfiguration method of the above second aspect.

In the line reconfiguration methods and the line reconfiguration apparatuses provided by the embodiments of the present application, the customer premise equipment side confirms that the state of the "Powered Device" (PD) of the corresponding port in the DPU device is abnormal through the "Power Sourcing Equipment" (PSE), and sends a first signal, where the first signal is configured to instruct to perform line reconfiguration; the device side receives the first signal, where the first signal is configured to instruct to perform line reconfiguration; and line reconfiguration is performed according to the first signal. In this way, the PD device side can implement line reconfiguration according to received line reconfiguration information during reverse power feed, and implements the RCR function during the switching process of the port relay in the DPU device.

Other aspects will be apparent upon reading and understanding the drawings and detailed description.

### BRIEF DESCRIPTION OF THE DRAWINGS

Fig. 1 is a schematic diagram of implementation of an RCR function;
Fig. 2 is a schematic flowchart of a general processing procedure of a line reconfiguration method according to an embodiment of the present application;
Fig. 3 is a schematic flowchart of a detailed processing procedure of a line reconfiguration method according to an embodiment of the present application;
Fig. 4 is a schematic circuit diagram of an RCR function implemented by a customer premise equipment according to an embodiment of the present application;
Fig. 5 is a schematic functional diagram of a customer premise equipment provided with an RCR signaling/power transmission circuit according to an embodiment of the present application;
Fig. 6 is a schematic flowchart of a line reconfiguration method according to an embodiment of the present application;
Fig. 7 is a schematic flowchart of a process for performing line reconfiguration on a DPU device according to the present application;
Fig. 8 is a schematic functional diagram of a newly added RCR receiving circuit according to an embodiment of the present application;
Fig. 9 is a schematic structural diagram of an RCR receiving circuit according to an embodiment of the present application;
Fig. 10 is a schematic block diagram of a line reconfiguration apparatus according to an embodiment of the present application; and
Fig. 11 is a schematic block diagram of another line reconfiguration apparatus according to an embodiment of the present application.

### DETAILED DESCRIPTION

Fig. 2 is a schematic flowchart of a general processing procedure of a line reconfiguration method according to an embodiment of the present application. As shown in Fig. 2, the line reconfiguration method of this embodiment includes the following steps.

In step 101, a state of the line is confirmed.

The customer premise equipment side confirms the state of the PD of the corresponding port in the DPU device through the PSE. The state of the line is determined according to the POE standard or the Metallic Detection based Start-Up protocol (MDSU Protocol) specified in ETSI TS 101 548. When the line is abnormal, the PSE and the PD cannot handshake. If the PSE side device detects the correct state of the PD, the device does not send the first signal to reconfigure the line. The PSE side device and the PD side device follow the relevant POE standard procedure for reverse power feed between them.

In step 102, when it is confirmed that the state of the line is abnormal, a first signal is sent.

When the customer premise equipment confirms that the state of the line is abnormal, the first signal is sent.

Here, the frequency of the first signal avoids the frequency band of the voice signal and the frequency band of the wideband signal to mitigate interference to the voice signal and the wideband signal. Since the operating frequency range of the voice is 0 to 4 KHz, the operating frequency of the wideband signal is greater than 25 kHz, in order to avoid interference to the voice signal and the wideband signal, the first signal may have an operating frequency range of 4 kHz to 25 kHz. The first signal may be a sine wave of a single frequency or a square wave of a fixed period. The sine wave signal or the square wave signal form a first signal output after current limiting and AC coupling. The first signal is configured to instruct to perform line reconfiguration, that is, to notify the DPU device to switch the terminal line on the corresponding port to the DPU port.

In this embodiment, the time interval at which the first signal is outputted may be controlled, and the time length for sending the first signal has to meet the minimum pull-in set time for the DPU-side to reconfigure the relay. When the first signal is not outputted, the output circuit of the first signal is in a high impedance state to reduce power consumption.

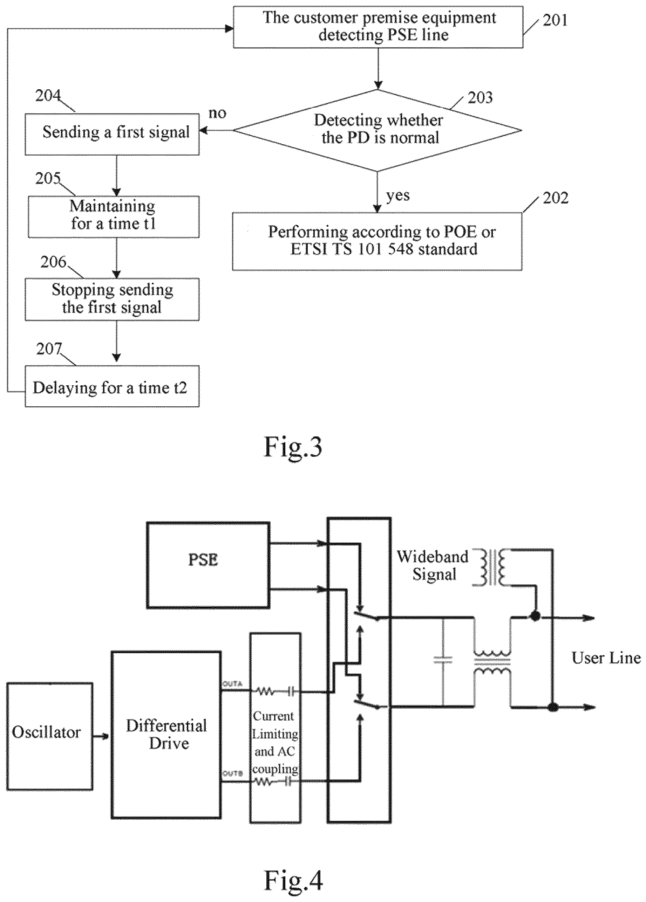

The detailed processing procedure of a line reconfiguration method in this embodiment is as shown in Fig. 3, including the following steps.

In step 201, the customer premise equipment detects a state of the line.

The determination of the state of the line follows the POE standard or the Metallic Detection based Start-Up (MDSU) Protocol specified in ETSI TS 101 548.

In step 203, it is detected whether the PD is normal. When the PSE side device detects the correct state of the PD, step 202 is performed, when the PSE side device detects that the state of the PD is abnormal, the power output circuit of the PSE is turned off, and step 204 is performed.

In step 202, when the PSE side device detects the correct state of the PD, the first signal is not sent to reconfigure the line. The PSE side device and the PD side device comply with the relevant POE standard or the ETSI TS 101 548 protocol for power classification, reverse power feed, and real-time detection of line errors.

In step 204, a first signal is outputted.

The line output is switched to the RCR signaling/power transmission circuit, and the RCR signaling/power transmission circuit generates a sine wave of a specific frequency or a square wave differential signal. The signal is outputted to the line after current limiting and AC coupling processing, to notify the DPU device to switch the terminal line of the corresponding port to the DPU port.

In step 205, the first signal is maintained for a certain maintenance time t1, to meet the minimum pull-in set time for the DPU-side to reconfigure the relay.

In step 206, the customer premise equipment stops outputting the first signal, and the first signal output circuit is in a high impedance state.

In step 207, after delaying for a fixed time t2, the customer premise equipment starts the line detection again, and returns to step 201.

In the above embodiment, on the basis of the conventional POE procedure, a RCR step when monitoring the abnormality of the PD is added.

A schematic circuit diagram of a RCR function circuit implemented by the customer premise equipment side according to the embodiment is as shown in Fig. 4. An oscillator generates a square wave signal at a fixed frequency. The level may be a Complementary Metal Oxide Semiconductor (CMOS) or Low Voltage Transistor-Transistor Logic (LVTTL), with a frequency range from 4KHz to 25KHz. The oscillating signal can also be outputted by a Central Processing Unit (CPU) or from an I/O (Input/Output) pin of a single-chip computer. In addition, the output maintenance time of the square wave signal, PSE, RCR signaling/power transmission switch selection are determined. The output maintenance time of the square wave signal should be greater than the minimum set or reset time requirement specified by the relay. The oscillating signal is converted by a differential driving module into a differential signal conforming to the level output requirement, and coupled to the user line after low-pass filtering. After the first output signal is maintained for a certain period of time, the terminal line is switched to the PSE side through the relay.

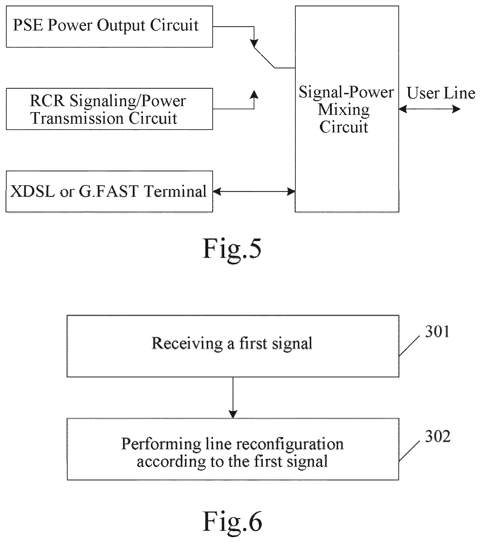

In order to implement the above-mentioned line reconfiguration method of this embodiment, an RCR signaling/power transmission circuit has to be added in the customer premise equipment for sending the first signal. The customer premise equipment function diagram of the RCR signaling/power transmission circuit is added as shown in Fig. 5, and the power output circuit of the PSE first detects the state of the line, and when the detection result is that RCR switching is required, the switch is switched to the RCR signaling/power transmission circuit. After completing the line switching command, the RCR signaling/power transmission circuit is disconnected, and the switch is switched to the output side of the PSE power supply.

Here, the switch can be implemented by a relay or a Metal Oxide Semiconductor (MOS) tube, or can be realized by controlling an output enable circuit of the PSE power output circuit and the RCR signaling/power transmission circuit.

The general processing procedure of another line reconfiguration method in this embodiment is as shown in Fig. 6, including the following steps.

In step 301, a first signal is received.

The DPU device receives the first signal sent by the customer premise equipment, and the first signal is used to instruct the DPU device to perform line reconfiguration.

In step 302, line reconfiguration is performed according to the first signal.

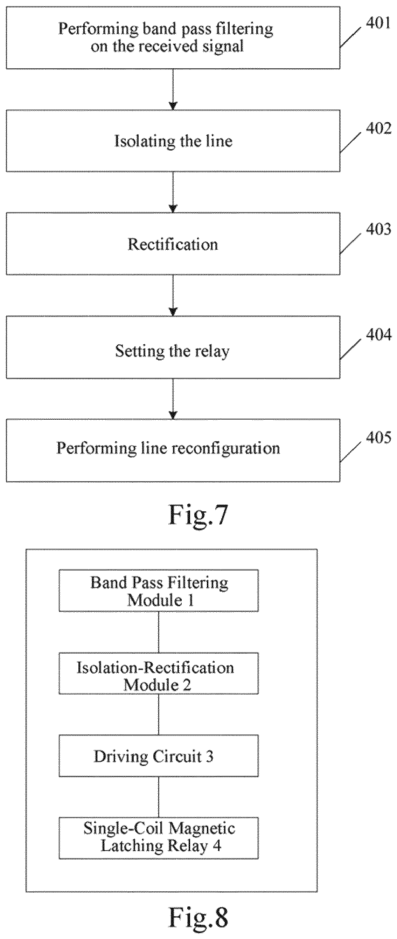

In order to implement the embodiment, a RCR receiving circuit is added on the DPU device side, and when the corresponding port of the DPU device is in the "bypass" state, the DPU device performs the line reconfiguration process after receiving the first signal sent by the customer premise equipment side. As shown in Fig. 7, the following steps are included.

In step 401, band pass filtering is performed on the received signal.

The band pass filtering of the received signal allows only the RCR signaling/power signal to pass, and present a high-impedance state to the voice and wideband signals, so the normal service of voice and wideband may not be affected.

In step 402, the line is isolated.

In step 403, rectification is performed.

In step 404, the relay is set.

In step 405, line reconfiguration is performed.

In this embodiment, the DPU device generates a DC pulse signal through filtering, line isolation, and rectification, so that the relay coil in the DPU device remains set, and the normally closed contact is disconnected, so that the corresponding port of the DPU device is disconnected from the CO interface. The normally opened contact is closed, so that the corresponding port of the DPU device is connected to the USER interface, thereby implementing the terminal line reconfiguration function while the DPU device is reversely powered.

In this embodiment, the function diagram of the newly added RCR receiving circuit on the DPU device side is as shown in Fig. 8, including: a band pass filtering module 1 configured to perform band pass filtering on the received signal, and allow only RCR signaling/power supply signal to pass through, and present a high-impedance state to voice and wideband signals, so that the normal service of voice and wideband may not be affected; an isolation-rectification module 2 configured to convert the RCR signaling/power signal into a DC power source to be provided to a single-coil magnetic latching relay 4; a driving circuit 3 configured to set the relay to complete switching the USER interface terminal line from the CO interface side to the port corresponding to the DPU.

In this embodiment, after the DPU device is normally started, the configuration state of the terminal line may also be determined by the DPU device itself.

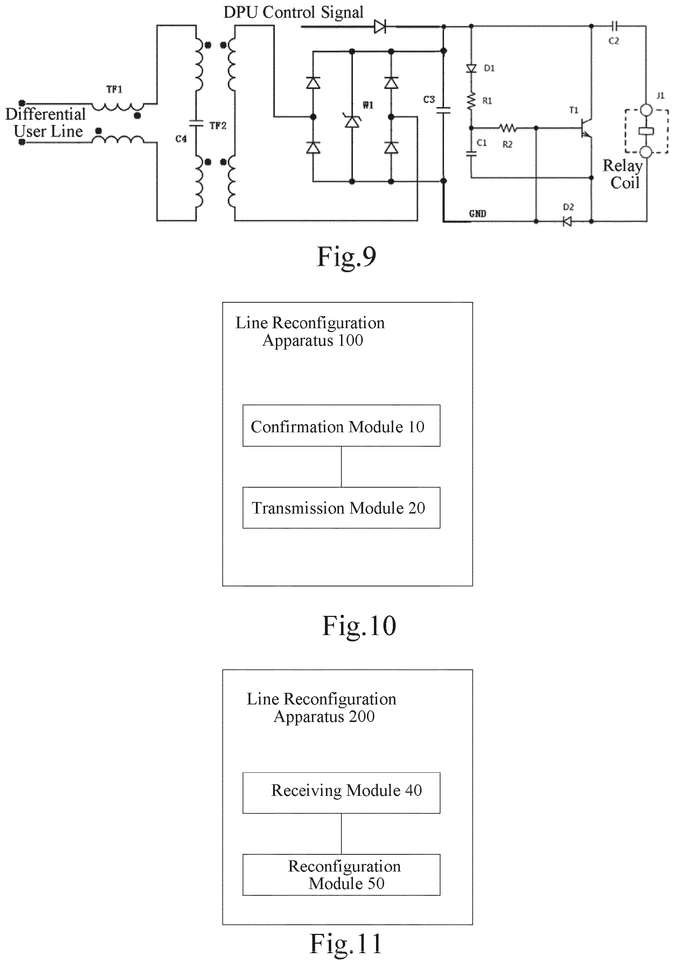

In this embodiment, a schematic structural diagram of a newly added RCR receiving circuit on the DPU device side is shown in Fig. 9. A transformer TF1, a transformer TF2, and a capacitor C4 form a band pass filter, and since the band pass filter presents a high-impedance state to voice and wideband signals so it does not affect the normal operation of voice and wideband signals and can isolated signals from the terminal line. The RCR signaling/power signal from the terminal line passing through the band pass filter, the rectifier bridge, the voltage regulator W1 and the filter C3 is rectified into a DC pulse signal. The DC pulse signal is passed through the capacitor C2 to make the coil of the single coil magnetic latching relay to obtain a set pulse which is positive on the upper side and negative on the lower side. When the relay is in the set state, the USER interface user line is disconnected from the CO interface, and is connected to the wideband signal and the PD module connected to the corresponding port of the DPU, thereby realizing the line reconfiguration function in the case of reverse power feed. During the line reconfiguration, since the DC pulse width is generally several tens of milliseconds, the capacitor C2 is not fully charged, therefore, after the pulse disappears, the relay can still remain in the set state. After the DPU device starts normally, the configuration state of the terminal line can also be determined by the DPU control signal of the DPU device. When the DPU control signal is at a high level, to make the relay in the set state, the capacitor C2 is in the charging state, and the polarity of the C2 is positive on the left side and negative on the right side. When the DPU control signal is at a low level, or the device is turned off, the coil of the relay is caused to generate a reset pulse signal which is negative on the upper side and positive on the lower side. Then, the relay is reset, the normally closed contact is closed, and the normally opened contact is opened, so that the USER interface terminal line is disconnected from the DPU port, and connected to the CO interface. When the line is connected to the CO interface, the DPU device is in the "bypass" state by default.

It should be noted that, in this embodiment, the PSE and the customer premise equipment may be integrated in the same device, or may be independent from each other.

The embodiment of the present application further provides a line reconfiguration apparatus, and the apparatus 100, as shown in Fig. 10, includes: a confirmation module 10 and a transmission module 20.

The confirmation module 10 is configured to confirm the state of the line.

The transmission module 20 is configured to send a first signal when the confirmation module 10 confirms that the state of the line is abnormal, and first signal is configured to instruct to perform line reconfiguration.

In an embodiment, the confirmation module 10 can be configured to detect the resistance of the line. When the line resistance ranges from 23.75 ohms to 26.25 ohms, it is confirmed that the line is normal; and when the resistance range is less than 23.75 ohms or greater than 26.25 ohms, it is confirmed that the line is abnormal.

In an embodiment, the frequency of the first signal is greater than 4 KHz and less than 25 KHz.

In an embodiment, since the operating frequency range of the voice is 0 to 4 KHz, the operating frequency of the wideband signal is greater than 25 kHz, in order to avoid interference to the voice signal and the wideband signal, the first signal may have an operating frequency range of 4 kHz to 25 kHz. The first signal may be a sine wave of a single frequency or a square wave of a fixed period. The sine wave signal or the square wave signal are converted into a symmetrical signal with a level that meets the requirements inside the customer premise equipment, and form a first signal output after current limiting and AC coupling. The first signal is configured to instruct to perform line reconfiguration, that is, to notify the DPU device to switch the terminal line on the corresponding port to the DPU port.

In this embodiment, the time interval at which the first signal is outputted may be controlled, and the time length for sending the first signal has to meet the minimum pull-in set time of the relay inside the customer premise equipment. When the first signal is not outputted, the customer premise equipment is in a high impedance state to reduce power consumption.

A schematic circuit diagram of a RCR function circuit implementing the line reconfiguration apparatus according to the embodiment is as shown in Fig. 4. An oscillator generates a square wave signal at a fixed frequency. The level may be a CMOS or LVTTL, with a frequency range from 4KHz to 25KHz. The oscillating signal can also be outputted by a CPU or from an I/O pin of a single-chip computer. In addition, the output maintenance time of the square wave signal, PSE, RCR signaling/power transmission switch selection are determined. The output maintenance time of the square wave signal should be greater than the minimum set or reset time requirement specified by the relay. The oscillating signal is converted by a differential driving module into a differential signal conforming to the level output requirement, and coupled to the user line after low-pass filtering. After the first output signal is maintained for a certain period of time, the terminal line is switched to the PSE side through the relay.

In order to implement the above-mentioned line reconfiguration method of this embodiment, on the basis of the original PSE signal-power mixing circuit for the line reconfiguration, a RCR signaling/power transmission circuit has to be added for sending the first signal. As shown in Fig. 5, the power output circuit of the PSE first detects the state of the line, and when the detection result is that RCR switching is required, the switch is switched to the RCR signaling/power transmission circuit. After completing the line switching command, the RCR signaling/power transmission circuit is disconnected, and the switch is switched to the output side of the PSE power supply.

Here, the switch can be implemented by a relay or a MOS tube, or can be realized by controlling an output enable circuit of the PSE power output circuit and the RCR signaling/power transmission circuit.

In this embodiment, the time interval at which the first signal is outputted may be controlled, and the time length for sending the first signal has to meet the minimum pull-in set time for the relay inside the line reconfiguration apparatus. When the first signal is not outputted, the output circuit of the first signal is in a high impedance state to reduce power consumption.

An embodiment of the present application also provides a line reconfiguration apparatus. The structure of the apparatus 200 is as shown Fig. 11, including a receiving module 40 and a reconfiguration module 50.

The receiving module 40 is configured to receive a first signal. The first signal is used to instruct to perform line reconfiguration.

The reconfiguration module 50 is configured to perform line reconfiguration according to the first signal.

In an embodiment, the reconfiguration module 50 may be configured to convert the first signal into a pulse signal for controlling the relay coil according to a certain relationship, and realize line reconfiguration of the electronic device by switching the state of the relay switch.

In an embodiment, the relay may be a single coil magnetic latching relay.

In this embodiment, when the line reconfiguration apparatus is a DPU device, an RCR receiving circuit is added on the DPU device side. As shown in Fig. 9, the TF1 transformer, the TF2 transformer, and the capacitor C4 form a band pass filter, and since the filter presents a high-impedance state to voice and wideband signals so it does not affect the normal operation of voice and wideband signals and can isolated signals from the terminal line. The RCR signaling/power signal from the terminal line passing through the band pass filter, the rectifier bridge, the W1 voltage regulator and the C3 filter is rectified into a DC pulse signal. The DC pulse signal is passed through the C2 capacitor to make the coil of the single coil magnetic latching relay to obtain a set pulse which is positive on the upper side and negative on the lower side. When the relay is in the set state, the USER interface user line is disconnected from the CO interface, and is connected to the wideband signal and the PD module connected to the corresponding port of the DPU, thereby realizing the line reconfiguration function in the case of reverse power feed. During the line reconfiguration, since the DC pulse width is generally several tens of milliseconds, the capacitor C2 is not fully charged, therefore, after the pulse disappears, the relay can still remain in the set state. After the DPU device starts normally, the configuration state of the terminal line can also be determined by the DPU control signal of the DPU device. When the DPU control signal is at a high level, to make the relay in the set state, the capacitor C2 is in the charging state, and the polarity of the C2 is positive on the left side and negative on the right side. When the DPU control signal is at a low level, or the device is turned off, the coil of the relay is caused to generate a reset pulse signal which is negative on the upper side and positive on the lower side. Then, the relay is reset, the normally closed contact is closed, and the normally opened contact is opened, so that the USER interface terminal line is disconnected from the DPU port, and connected to the CO interface. When the line is connected to the CO interface, the DPU device is in the "bypass" state by default.

It should be noted that, in practical applications, the functions of the confirmation module 10 and the transmission module 20 may be implemented by a central processing unit (CPU), a microprocessor (MPU), a digital signal processor (DSP) or a programmable gate array (FPGA) located on the customer premise equipment. The functions of the receiving module 40 and the reconfiguration module 50 may be implemented by a CPU, a MPU, a DSP, or a FPGA located on the FTTDp.

In addition, an embodiment of the present application further provides a computer readable medium storing a line reconfiguration program, and the line reconfiguration program is executed by the processor to implement the steps of the line reconfiguration method provided by the embodiment shown in Fig. 2.

In addition, an embodiment of the present application further provides a computer readable medium storing a line reconfiguration program, and the line reconfiguration program is executed by the processor to implement the steps of the line reconfiguration method provided by the embodiment shown in Fig. 6.

Those of ordinary skill in the art will appreciate that all or some of the steps of the method, and functional blocks/units in the system and apparatus disclosed above may be implemented as software, firmware, hardware, and suitable combinations thereof. In a hardware implementation, the division between functional modules/units mentioned in the above description does not necessarily correspond to the division of physical components. For example, one physical component may have multiple functions, or one function or step may be composed of several physical components working together. Some or all of the components may be implemented as software executed by a processor, such as a digital signal processor or a microprocessor, or implemented as an integrated circuit, such as an application specific integrated circuit. Such software may be distributed on a computer readable medium, which may include computer storage media (or non-transitory media) and communication media (or transitory media). As is well known to those of ordinary skill in the art, the term computer storage medium includes volatile and nonvolatile, removable and non-removable media, implemented in any method or technology for storing information, such as computer readable instructions, data structures, program modules or other data. Computer storage media includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage device, or may be other medium used to store the desired information and that can be accessed by the computer. Moreover, it is well known to those skilled in the art that communication media typically includes computer readable instructions, data structures, program modules or other data in a modulated data signal, such as a carrier wave or other transport mechanism, and can include any information delivery media.

The above description is only exemplary embodiments of the present application, and is not intended to limit the scope of the present application.

### Industrial applicability

The embodiment of the present application provides a line reconfiguration method and apparatus, which can perform an RCR function in a process of switching a port relay in a DPU device.

## Claims

1. A line reconfiguration method, comprising:
confirming a state of a line; and
when confirming that the state of the line is abnormal, sending a first signal,
wherein the first signal is configured to instruct to perform line reconfiguration.

2. The line reconfiguration method according to claim 1, wherein a frequency range of the first signal does not overlap with a frequency range of a voice signal, and does not overlap with a frequency range of a wideband signal.

3. The line reconfiguration method according to claim 1 or 2, wherein sending the first signal comprises: sending a sine wave signal or a square wave differential signal, and then outputting the same in an AC coupling manner.

4. A line reconfiguration method, the method being applied to an electronic device, comprising:
receiving a first signal, wherein the first signal is configured to instruct to perform line reconfiguration; and
performing line reconfiguration based on the first signal.

5. The line reconfiguration method according to claim 4, wherein the performing line reconfiguration according to the first signal comprises:
converting the first signal into a pulse signal for controlling a relay coil, and performing the line reconfiguration of the electronic device by switching on or off states of the relay.

6. The line reconfiguration method according to claim 5, wherein the relay is a single coil magnetic latching relay.

7. A line reconfiguration apparatus comprising: a confirmation module and a transmission module; wherein
the confirmation module is configured to confirm a state of a line;
the transmission module is configured to send a first signal when the confirmation module confirms that the state of the line is abnormal, wherein the first signal is configured to instruct to perform line reconfiguration.

8. The line reconfiguration apparatus according to claim 7, wherein a frequency range of the first signal does not overlap with a frequency range of a voice signal, and does not overlap with a frequency range of a wideband signal.

9. The line reconfiguration apparatus according to claim 7 or 8, wherein the transmission module is configured to send a sine wave signal or a square wave differential signal and output the same in an AC coupling manner.

10. A line reconfiguration apparatus comprising: a receiving module and a reconfiguration module; wherein
the receiving module is configured to receive a first signal, wherein the first signal is configured to instruct to perform line reconfiguration; and
the reconfiguration module is configured to perform line reconfiguration according to the first signal.

11. The line reconfiguration apparatus according to claim 10, wherein the reconfiguration module is configured to convert the first signal into a pulse signal for controlling a relay coil, and perform the line reconfiguration of the electronic device by switching on or off states of the relay.

12. The line reconfiguration apparatus according to claim 11, wherein the relay is a single coil magnetic latching relay.

13. A computer readable medium storing a line reconfiguration program, the line reconfiguration program being executed by a processor to implement the steps of the line reconfiguration method according to any one of claims 1 to 3.

14. A computer readable medium storing a line reconfiguration program, the line reconfiguration program being executed by a processor to implement the steps of the line reconfiguration method according to any one of claims 4 to 6.
